## Europäisches Patentamt
## European Patent Office
## Office européen des brevets

(19)

(11) Publication number: **0 001 170**
**B1**

(12) **EUROPEAN PATENT SPECIFICATION**

(45) Date of publication of patent specification: **17.02.82**

(51) Int. Cl.³: **A 01 K  1/00, F 24 F  7/06**

(21) Application number: **78300340.3**

(22) Date of filing: **04.09.78**

(54) An improved rearing unit.

(30) Priority: **02.09.77 GB  3668377**

(43) Date of publication of application:
**21.03.79 Bulletin 79/6**

(45) Publication of the grant of the European patent:
**17.02.82 Bulletin 82/7**

(84) Designated Contracting States:
**BE CH DE FR NL SE**

(56) References cited:
**CH - A - 430 116**
**DE - A - 1 729 510**
**FR - A - 1 530 107**
**FR - A - 1 539 903**
**FR - A - 1 572 310**
**FR - A - 2 079 828**
**GB - A - 1 204 773**
**US - A - 3 174 423**
**US - A - 3 203 033**

(73) Proprietor: **Spotmanor Limited**
**Vale Industrial Estate**
**Spilsby Lincolnshire, PE23 5HE (GB)**

(72) Inventor: **Shaw, John Charles Michael**
**Welton Vale House Welton-Le-Wold**
**Louth Lincolnshire (GB)**

(74) Representative: **Lister, David Anthony**
**APPLEYARD, LEES & CO. 15, Clare Road**
**Halifax West Yorkshire, HX1 2HY (GB)**

Courier Press, Leamington Spa, England.

## An improved rearing unit

This invention relates to a rearing unit for farm animals having all of the features set out in the preamble of Claim 1.

It has been found under normal farm conditions to be difficult to rear farm animals such as baby calves without incurring unacceptable losses of the animals. Such losses of the animals occur due to a variety of reasons but it has been found that one major cause is due to the animals contracting pneumonia.

Rearing units for farm animals are already known and in French Patent No: 1,530,107 there is described a building in which air enters through ventilators in the roof, spreads through the building, and penetrates into a sewage sump. The air is then expelled by electric fans positioned at one or both ends of the building. However, the air is expelled at a point above the ground level and the air outlet is not choked or restricted and is not shielded from prevailing winds.

The pigsty described in DE—A— 1,729,510 is provided with air inlets in the roof and the air is extracted from the pigsty by suction fans disposed in the walls of the pigsty at a point above ground level. The outlets of the suction fans are thus not restricted or choked and are not shielded from any prevailing winds.

British Patent No: 1,204,773 describes a livestock shed in which air is drawn into the shed by impellers located in the walls of dung alleys at each side of the shed. However, here again the outlets of the impellers are not restricted or choked and are not shielded from prevailing winds.

French Patent No: 1,539,903 describes a piggery having a ventilation system in which air is drawn through a duct and expelled by a suction fan. There is no free air space beneath the piggery and therefore the outlet of the suction fan, although not specifically described, must be disposed above ground level. Furthermore, there is no disclosure in this specification of any restriction or choke on the outlet or any shielding thereof from prevailing winds.

French Patent No: 1,572,310 describes a building in which air is drawn into the building through an air entry shaft disposed below ground level and air is withdrawn from the building by a fan again disposed below ground level. However, there is no free air space formed beneath the building and there is no description of any restriction or choking of the fan outlet or of any shielding of the fan outlet from prevailing winds.

French Patent No: 2,079,828 describes a building having air extractors disposed in the side walls above ground level and there is thus no description of utilising a space beneath the building as a restriction or choke or to effect shielding of the air extractor outlets.

Swiss Patent No: 430116 describes a stock building provided with air extraction fans disposed in the upper portion of the side walls and therefore the outlets of the air extraction fans are not restricted or choked and are not shielded from prevailing winds.

U.S. Patent No: 3,174,423 and U.S. Patent No: 3,203,033 describe an animal house ventilator and a livestock pen structure respectively but do not dispose a rearing unit having the feature of expelling air into a space beneath the unit.

The above described known units therefore suffer from the disadvantage that under conditions of low speed air flow through the units, draughts could be created therein which would render the animals more susceptible to illnesses such as for example pneumonia and the object of this invention is to provide a rearing unit in which the above disadvantage is alleviated.

According to this invention a rearing unit for farm animals comprises a substantially closed rectangular body having one or more cages mounted therein, the or each of which is adapted to have an animal disposed therein; air inlet means formed in the upper portion of the body for allowing air to enter the body; air outlet means formed in the lower portion of the body through which air is withdrawn from the body; support means for supporting a floor of the unit in spaced-apart relationship from the ground to allow air to pass thereunder; and air extraction means disposed beneath the floor of the unit for withdrawing air through the air outlet means from the body of the unit; characterised in that the air withdrawn from the body of the unit by the air extraction means is expelled into the space beneath the unit between the floor and the ground.

The discharge of the extracted air into the restricted space beneath the unit results in providing a choke or restriction on the outlet which is particularly advantageous in preventing reverse air flow through the air extraction means under conditions of slow speed high volume air flow through the unit which it is considered forms the most suitable conditions of air flow for the rearing of animals. In addition, the discharge of extracted air beneath the unit not only provides such a choke or restriction but also the outlet of the air extraction means is more effectively shielded from any prevailing wind than is the case if the outlet is disposed in the side wall or end wall of the unit as shown in a number of the buildings described in the prior art. It will also be appreciated that the extracted air from such a rearing unit carries with it particles of noxious matter and the discharge of the extracted air onto the ground beneath the unit reduces any environmental air pollution created in the vicinity of the unit.

A preferred embodiment of this invention will now be described by way of example only, with reference to the accompanying drawings of which:—

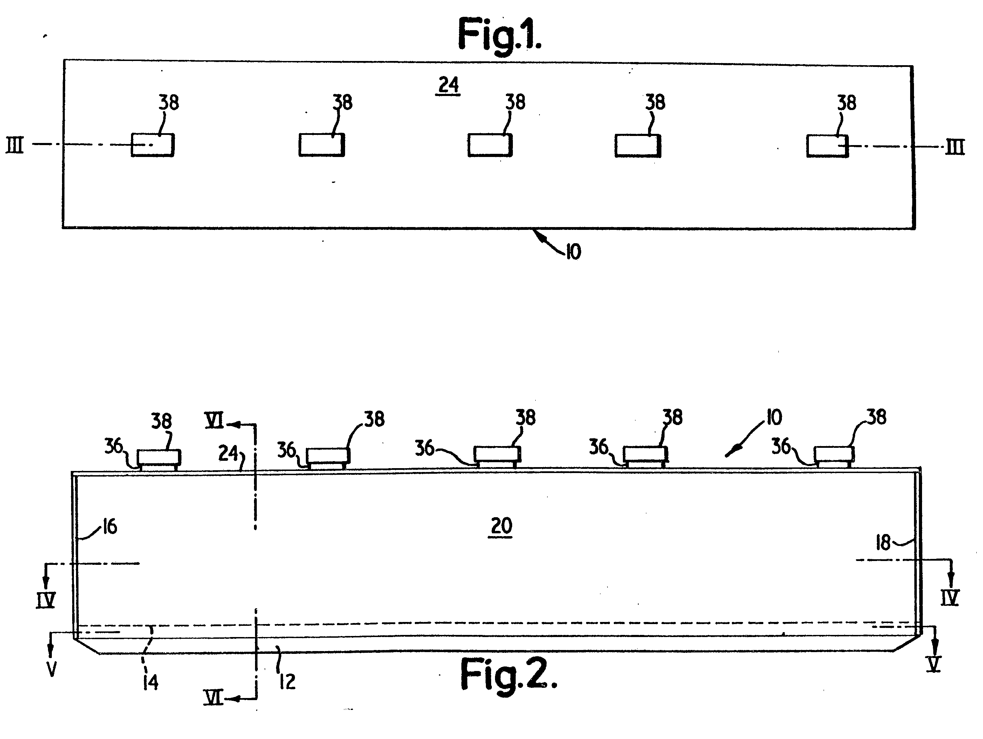

Figure 1 is a plan view of a rearing unit;

Figure 2 is a side elevation of the rearing unit;

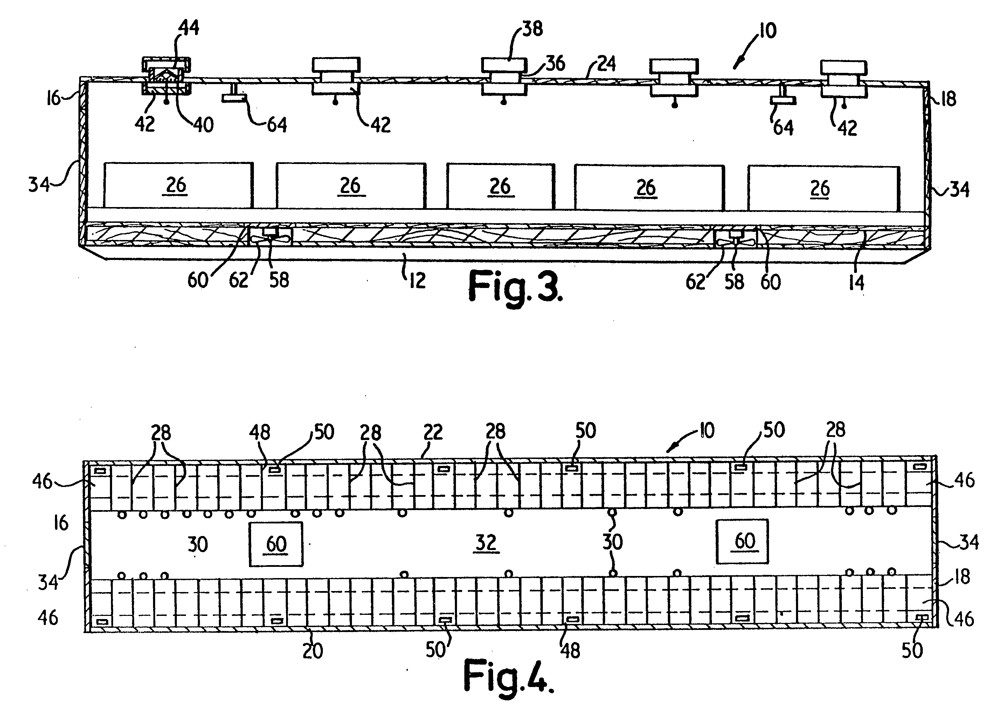

Figure 3 is a sectional side elevation on the line III—III in Figure 1 of the drawings;

Figure 4 is a sectional plan view on the line IV—IV in Figure 2 of the drawings;

Figure 5 is a sectional plan view on the line V—V in Figure 2 of the drawings;

Figure 6 is a sectional end elevation on the lines VI—VI in Figure 2 of the drawings; and

Figure 7 is a sectional side elvation of an alternative cowling.

Referring now to the drawings, a rearing unit for farm animals such as baby calves comprises a substantially closed rectangular wooden body indicated generally at 10 which is mounted on two spaced-apart longitudinally extending skid members 12. The unit is capable of being moved slidably on the skid members 12 to enable it to be located in a required position on, for example, a concrete base (not shown).

The body 10 comprises a rectangular wooden floor 14 having two wooden end walls, 16, 18 and two wooden side walls 20, 22 extending upwardly from the edges of the floor 14, and a wooden roof 24 extending between the upper edges of the end walls 16, 18 and the side walls 20, 22.

Two rows of cages 26 are mounted in the body 10 and extend along each side wall 20, 22 over substantially the entire length thereof. The cages 26 are provided with removable partitions or divisions 28 so that the cages 26 can be arranged to consist of individual units whilst enabling the size of each cage unit to be varied to accommodate different sizes and/or numbers of calves as they develop and grow. Each individual cage unit is arranged so that during the early stages of development of the calves when only one calf is placed in each cage unit, the longitudinal axis of each cage unit extends transversely of the body 10 and the calf is constrained so that the head of the calf faces towards the centre line of the body 10 of the rearing unit. The cages 26 can be formed of any suitable material and are provided with a slatted floor through which animal excrement can pass. A continuous bucket type of feeding unit 30 is mounted at the end of each cage unit adjacent to the centre line of the body 10 and two alternative mounting positions for the feeding unit 30 are provided so that the calf can either feed from a teat (not shown) mounted on the bucket or direct from the bucket itself. A central walkway 32 is provided between the rows of cages 26 and access thereto from the exterior of the body 10 is provided by doors 34 formed in each end wall 16, 18.

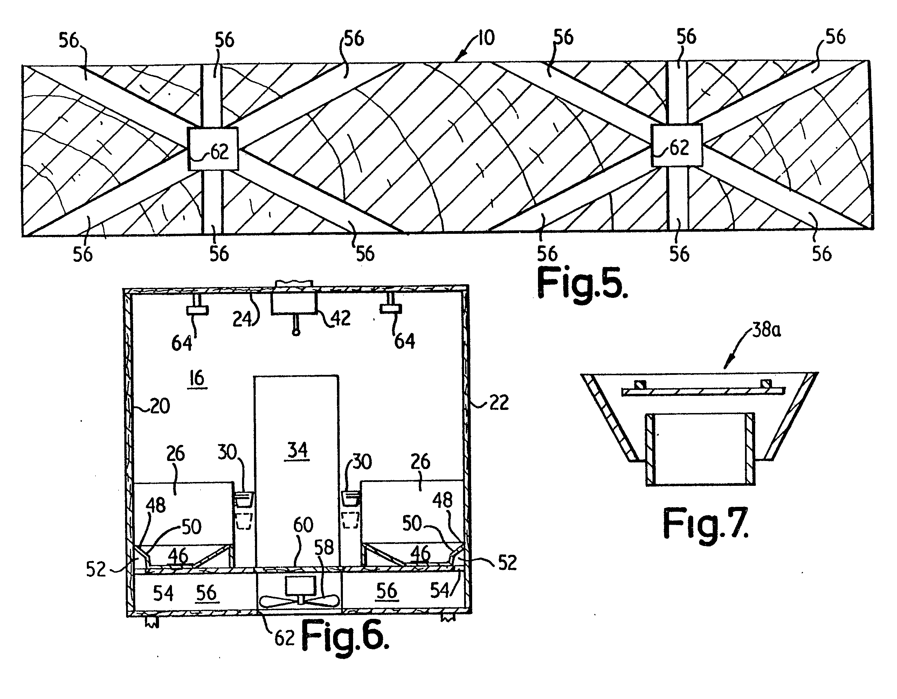

Five spaced-apart air inlets 36 are formed in the roof 24 on the centre line thereof and each air inlet 36 is provided with a cowling 38 to restrict or prevent the creation of draughts in the body 10 of the rearing unit. An alternative type of cowling which could be mounted on each air inlet 36 is indicated generally at 38(a) in Figure 7 of the drawings. An electrical heating element 40 and an air filter and diffuser 42 formed of an open cell foam plastics material are mounted in each air inlet 36. A valve 44 is also disposed in each air inlet 36 to enable the flow of air through each air inlet 36 to be adjusted. The valves 44 can be arranged to be manually operable or, alternatively, the valves 44 can be power-operated, for example electrically, so that the flow of air into the body 10 of the rearing unit can be controlled by a separate control means (not shown).

Filtered and, if desired, heated air thus enters the body 10 of the rearing unit through the air inlets 36 at spaced-apart points on the centre line of the roof 24, and the volume of air entering the body 10 of the unit can be controlled and adjusted by means of the valves 44.

A trough 46 formed of a glass-reinforced plastics material is mounted on the floor 14 of the unit at each side thereof and each trough 46 extends along the full length of the unit. Each trough 46 is disposed beneath an associated one of the rows of cages 26 and is adapted to collect the animal excrement falling through the slatted floor of the cages 26 enabling this excrement to be easily removed periodically from the rearing unit. The side of each trough 46 adjacent to the associated side 20, 22 of the body 10 of the unit is raised and is provided with an inclined upper surface 48 in which air outlet openings 50 are formed at spaced-apart intervals therealong. The raised side portion of each trough 46 forms an air outlet passage 52 which provides communication between air outlet apertures 54 formed in the floor 14 and the air outlet openings 50 formed in the inclined surface 48 of the trough 46. The air outlet apertures 54 are disposed at spaced-apart intervals along each side of the body 10 of the unit and are each connected by ducting 56 disposed beneath the floor 14 to one of the two electrically-operated fans 58 mounted beneath the floor 14 on the centre line of the body 10. Consequently, the fans 58 are mounted directly beneath the central walkway 32 and access can be provided to the fans 58 through removable covers 60 in the central walkway 32 of the floor 14 to facilitate, for example, servicing of the fans at periodic intervals.

The fans 58 draw air from the body 10 of the unit through the air outlet openings 50, the air outlet passages 52, the air outlet apertures 54 and the ducting 56 and this air is expelled by the fans beneath the rearing unit through openings 62. The withdrawal of air from the body 10 of the rearing unit by the fans 58 causes air to flow into the unit through the air inlets 36 in the roof 24. The air flowing into the unit through the air inlets 36 is filtered and the direction of flow thereof is diffused by the air filters and diffusers 42 so that a uni-directional blast of air is not

**0 001 170**

created. The air flow in the unit itself is directed from the centre line of the body 10 of the unit past the animals in the cages 26 towards the sides of the unit and thus flows past the caged animals from the nose to the tail thereof.

The control means (not shown) is adapted to control the speed of the fans 58 in addition to controlling the operation of the heating elements 40 and, if desired, the operation of the valves 44 in the air inlets 36. The control means (not shown) is provided with a facility whereby a minimum rate of flow of air can be selected by setting each of the fans 58 to rotate at least at a minimum speed. This, of course, provides control of the minimum rate of air flow in the unit and also facilitates the accurate control of the temperature of the air in the body 10 of the unit. The tempreature of the air in the unit is sensed by a temperature sensing device (not shown) such as a thermister and when the temperature of the air in the unit rises above a predetermined desired value, the control means increases the speed of the fans 58 to increase the air flow through the unit and simultaneously switches off the heating elements 40. This type of control arrangement facilitates the accurate control of the temperature of the air in the unit without creating sudden surges of air flow within the unit.

Additional background heating within the unit can be provided by gas fired heaters 64 mounted at spaced-apart intervals on the roof 24 of the unit and this background heating, if desired, is controlled by an independent thermostat (not shown) mounted on one wall of the body 10 of the unit.

It will therefore be apparent that the above described rearing unit thus provides a carefully controlled environment for the baby calves which greatly assists the rearing of the calves and assists in minimising losses due to infections, such as pneumonia.

**Claims**

1. A rearing unit for farm animals comprising a substantially closed rectangular body (10) having one or more cages (26) mounted therein, the or each of which is adapted to have an animal disposed therein; air inlet means (36) formed in the upper portion of the body (10) for allowing air to enter the body (10); air outlet means (50, 52, 54) formed in the lower portion of the body (10) through which the air is withdrawn from the body; support means (12) for supporting a floor (14) of the unit in spaced-apart relationship from the ground to allow air to pass thereunder; and air extraction means (56, 58, 62) disposed beneath the floor (14) of the unit for withdrawing air through the air outlet means (50, 52, 54) from the body of the unit; characterised in that the air withdrawn from the body of the unit by the air extraction means (56, 58, 62) is expelled into the space beneath the unit between the floor (14) and the ground.

2. A rearing unit according to Claim 1, further characterised in that the air inlet means (36) is disposed on the longitudinal centre line of the body (10), and the air outlet means (50, 52, 54) comprises air outlet apertures (54) located adjacent to the side walls (20, 22) of the body (10) so that the flow of air through the unit is directed from the centre of the body towards the sides thereof.

3. A rearing unit according to Claim 2, further characterised in that the or each air outlet aperture (54) is formed in the floor (14) of the unit adjacent to the side walls (20, 22) thereof.

4. A rearing unit according to Claim 3, further characterised in that a trough (46) is mounted on the floor (14) of the unit at each side thereof and extends parallel to the side walls (20, 22) of the unit.

5. A rearing unit according to Claim 4, further characterised in that the side of each trough (46) adjacent to the sides of the body of the unit is raised and provided with an inclined upper surface (48) in which air outlet openings (50) are formed at spaced-apart intervals therealong.

6. A rearing unit according to Claim 5, further characterised in that the raised side portion of each trough (46) forms an air outlet passage (52) providing communication between the air outlet openings (50) in the upper surface of the raised side of the trough (46) and the air outlet apertures (54) in the floor (14) of the unit.

7. A rearing unit according to Claim 5 or Claim 6, further characterised in that the air extraction means (56, 58, 62) comprises one or more air extraction fans (58) which are connected to the or each outlet aperture (54) by ducting (56) formed beneath the floor (14) of the body (10) of the unit so that air is withdrawn through the or each air outlet opening (50) and air outlet aperture (54) from the body (10) of the unit.

8. A rearing unit according to Claim 7, further characterised in that the air extraction fan or fans (58) is or are disposed beneath the floor (14) of the unit on the longitudinal centre line thereof so that the air extracted thereby is expelled beneath the unit.

9. A rearing unit according to Claim 8, further characterised in that two fans (58) are provided each of which are disposed in spaced-apart relationship along the longitudinal centre line of the unit.

10. A rearing unit according to any one of the preceding claims, further characterised in that heating means (40, 64) is provided for heating the air in the unit.

11. A rearing unit according to any one of Claims 7 to 9, and Claim 10, further characterised in that control means is provided for controlling the speed of the or each air extraction fan (58) and the operation of the heating means (40, 64) to maintain a desired volume of air flow through the unit and also control the temperature and humidity of the air in the unit.

12. A rearing unit according to any one of the preceding claims, further characterised in that the air inlet means (36) comprises one or more inlets (36) formed in the roof (24) of the body (10).

13. A rearing unit according to Claim 12, further characterised in that the or each air inlet (36) is provided with valve means (44) to enable the flow of air therethrough to be adjusted.

14. A rearing unit according to Claim 12 or Claim 13, further characterised in that the or each air inlet (36) is provided with air filtration and diffusion means (42) for filtering and diffusing the air flowing therethrough.

15. A rearing unit according to any one of Claims 12 to 14, further characterised in that the external end of the or each air inlet (36) is provided with a cowling (38) to restrict or prevent the reverse flow of air therethrough.

16. A rearing unit according to any one of the preceding claims, further characterised in that a row of cages (26) is provided along each side wall (20, 22) of the unit with the longitudinal axis of each cage (26) extending transversely of the unit.

17. A rearing unit according to any one of the preceding claims, further characterised in that the or each cage (26) is or are provided with removable partitions (28) so that the sizes of the cages (26) can be varied according to the number and/or sizes of the animals which are to be disposed therein.

18. A rearing unit according to any one of the preceding claims, further characterised in that a feeding and drinking unit (30) is provided at the end of the or each cage adjacent to the longitudinal centre line of the body of the unit.

## Revendications

1. Installation d'élevage pour animaux de ferme, comprenant une enceinte rectangulaire sensiblement close (10) comportant une ou plusieurs stalles (26) montées à l'intérieur, la ou chacune de ces stalles pouvant recevoir un animal; des moyens d'entrée d'air (36) agencés dans la partie supérieure de l'enceinte (10) pour permettre l'admission d'air dans celle-ci; des moyens de sortie d'air (50, 52, 54) formés dans la partie inférieure de l'enceinte (10) et à travers lesquels l'air est aspiré dans l'enceinte; des moyens (12) pour supporter un plancher (14) de l'enceinte au-dessus du niveau du sol pour permettre à l'air de pénétrer dans l'intervalle ainsi créé, et des moyens (56, 58, 62) d'extraction de l'air, placés au-dessous du plancher (14) de l'enceinte et destinés à extraire l'air de celle-ci à travers lesdits moyens de sortie (50, 52, 54), cette installation étant caractérisée en outre en ce que l'air extrait de l'enceinte de l'installation par les moyens d'extraction (56, 58, 62) est refoulé dans l'espace formé sous l'enceinte entre le plancher (14) et le sol.

2. Installation selon la Revendication 1, caractérisée en outre en ce que les moyens d'entrée d'air (36) sont disposés sur l'axe longitudinal médian de l'enceinte (10) et que les moyens de sortie d'air (50, 52, 54) comprennent des overtures de sortie d'air (54) situées à proximité des parois latérales longitudinales (20, 22) de l'enceinte (10) afin que l'écoulement de l'air à travers l'enceinte soit dirigé du milieu de celle-ci vers les côtes.

3. Installation d'élevage selon la Revendication 3, caractérisée en ce que la ou les ouvertures de sortie d'air (54) sont formées dans le plancher (14) de l'enceinte à proximité des parois latérales (20, 22) de celle-ci.

4. Installation d'élevage selon la Revendication 3, caractérisée en ce qu'un caniveau (46) est construit sur le plancher (14) de l'enceinte et de chaque côté de celle-ci, parallélement aux parois latérales (20, 22) de l'enceinte.

5. Installation d'élevage selon la Revendication 4, caractérisée en ce que le bord de chaque caniveau (46) qui est adjacent aux côtés de l'enceinte de l'installation est relevé et présente une surface supérieure inclinée (48) dans laquelle sont pratiqués des orifices de sortie d'air (50) répartis à des intervalles réguliers dans le sens longitudinal.

6. Installation d'élevage selon la Revendication 5, caractérisée en ce que le bord relevé de chaque caniveau (46) forme un passage de sortie d'air (52) assurant la communication entre les orifices de sortie d'air formés dans la surface supérieure dudit bord relevé du caniveau (46) et les ouvertureres de sortie d'air (54) prévues dans le plancher (14) de l'installation.

7. Installation d'élevage selon l'une ou l'autre des Revendications 5 ou 6, caractérisée en ce que les moyens d'extraction d'air (56, 58, 62) comprennent un ou plusieurs ventilateurs d'extraction d'air (58) reliés à une ou plusieurs ouvertures de sortie d'air (54) par une conduite (56) formée sous le plancher (14) de l'enceinte (10), de manière que l'air soit extrait de l'enceinte (10) à travers le ou chaque orifice de sortie d'air (50) et chaque ouverture de sortie d'air (54).

8. Installation d'élevage selon la Revendication 7, caractérisée en ce que les ventilateurs d'extraction d'air (58) sont disposés au-dessous du plancher (14) de l'enceinte, le long de l'axe longitudinal de celle-ci, afin que l'air ainsi extrait soit évacué sous l'enceinte.

9. Installation d'élevage selon la Revendication 8, caractérisée en ce qu'il est prévu deux ventilateurs (58) disposés chacun à un intervalle adéquat le long de l'axe longitudinal de l'enceinte.

10. Installation d'élevage selon l'une quelconque des Revendications 1 à 9, caractérisé en ce que des moyens de chauffage (40, 64) sont prévus pour chauffer l'air à l'intérieur de l'enceinte (10).

11. Installation d'élevage selon l'une quelconque des Revendications 7 à 9, et la Revendication 10, caractérisée en ce qu'il est prévu un moyen de commande pur contrôler la vitesse de chacun des ventilateurs d'extraction d'air (58) ainsi que le fonctionnement des moyens de chauffage (40, 64) afin de maintenir un débit pré-établi d'air en circulation à travers l'enceinte et aussi de contrôler la température et le degré hygrométrique de l'air dans l'enceinte.

12. Installation d'élevage selon l'une quelconque des Revendications 1 à 11, caractérisée en ce que les moyens d'entrée d'air (36) comportent une ou plusieurs entrées formées dans le toit (24) de l'enceinte (10).

13. Installation d'élevage selon la Revendication 12, caractérisée en ce que la ou chacune des entrées d'air (36) comporte une soupape (44) afin de permettre le réglage de l'écoulement de l'air à travers cetee enceinte.

14. Installation d'élevage selon l'une ou l'autre des Revendications 12 ou 13, caractérisée en outre en ce que la ou chacune des entrées d'air (36) est pourvue de moyens de filtrage et de diffusion de l'air (42) afin de filtrer et diffuser l'air qui les traverse.

15. Installation d'élevage selon l'une quelconque des Revendications 12 à 14, caractérisée en outre en ce que l'extrémité extérieure de la ou de chacune des entrées d'air (36) est munie d'un chapeau (38) destiné à restreindre ou empêcher l'écoulement en sens contraire de l'air à travers chacune de ces entrées.

16. Installation d'élevage selon l'une quelconque des Revendications 1 à 15, caractérisé en ce qu'il est prévu une rangée de stalles (26) le long de chaque paroi latérale (20, 22) de l'enceinte, l'axe longitudinal de chaque stalle (26) étant orienté perpendiculairement à celui de l'enceinte (10).

17. Installation d'élevage selon l'une quelconque des Revendications 1 à 16, caractérisée en ce que la ou chaque stalle (26) est pourvue de cloisons amovibles (28) afin de pouvoir modifier la dimension des stalles en fonction du nombre et/out de la taille des animaux qui y sont logés.

18. Installation d'élevage selon l'une quelconque des Revendications 1 à 17, caractérisée en ce qu'il est prévu un système d'alimentation et d'abreuvage (30) à l'extrémité de la ou de chaque stalle (26), à proximité de l'axe longitudinal de l'enceinte de l'installation.

## Patentansprüche

1. Tierzuchtanlage für landwirtschaftliche Tiere, die aus einem im westetlichen geschlossenen, rechteckigen Gebäude (10) mit einem oder mehreren darin eingebauten, zur Unterbringung jeweils eines Tieres geeigneten Stall-Käfigen (26) besteht, mit einem im oberen Teil des Gebäudes (10) zur Zufuhr von Luft in das Gebäude (10) ausgebildeten Lufteinlaß (36) und einem im unteren Teil des Gebäudes (10) ausgebildeten Luftauslaß (50, 52, 54), durch den Luft aus dem Gebäude (10) abgezogen wird, des weiteren mit einer Stützvorrichtung (12) zum in bezug auf den Boden der Anlage räumlich entfernten Abstützen des Anglagen-Fußbodens (14), die den Luftdurchtritt zwischen dem Fußboden (14) und dem Boden der Anlage ermöglicht, sowie mit iner unterhalb des Anglagen-Fußbodens (14) angeordneten Vorrichtung (56, 58, 62) zum Absaugen der Luft aus dem Anlagen-Gebäude (10) durch den Luftauslaß (50, 52, 54), dadurch gekennzeichnet. daß die aus dem Anlagen-Gebäude (10) mittels der Luftabsaugvorrichtung (56, 58, 62) abgesaugte Luft in den Hohlraum unterhalb der Anlage zwischen dem Fußboden (14) und dem Boden ausgestoßen wird.

2. Tierzuchtanlage nach Anspruch 1, dadurch gekennzeichnet, daß der Lufteinlaß (36) in der längsgerichteten Mittellinie des Gebäudes (10) angeordnet ist, während der Luftaustrittsöffnungen (54) enthaltende Luftauslaß (50, 52, 54) an die Seitenwände (20, 22) des Gebäudes (10) angrenzt, so daß der Luftstrom durch die Anglage von der Mitte des Gebäudes (10) zu dessen Seiten gerichtet ist.

3. Teirzuchtanlage nach Anspruch 2, dadurch gekennzeichnet, daß die oder jede Luftaustrittsöffnung (54) im Anlagen-Fußboden (14) angrenzend an die Seitenwände (20, 22) der Anlage angeordnet ist (sind).

4. Tierzuchtanlage nach Anspruch 3, dadurch gekennzeichnet, daß an jeder Seite des Fußbodens (14) der Anlage ein Trog (46) bzw. eine Rinne angeordnet ist, der bzw. die sich parallel zu den Seitenwänden (20, 22) der Anlage erstreckt.

5. Tierzuchtanlage nach Anspruch 4, dadurch gekennzeichnet, daß die neben den Seiten des Gebäudes (10) der Anlage angeordneten Seiten jedes Troges (46) erhöht und mit einer schrägen Oberfläche (48) versehen ist, in der Luftaustrittsöffnungen (50) in Abständen zueinander ausgebildet sind.

6. Tierzuchtanlage nach Anspruch 5, dadurch gekennzeichnet, daß der erhöhte Seitenabschnitt jedes Troges (46) einen Luft-Austrittskanal (52) aufweist, der die in der Oberfläche der erhöhten Seite des Troges (46) vorgesehenen Luftaustrittsöffnungen (50) mit den Luftaustrittsöffnungen bzw. — löchern (54) im Fußboden (14) der Anlage verbindet.

7. Tierzuchtanlage nach Anspruch 5 oder 6, dadurch gekennzeichnet, daß die Luft-Absaugvorrichtung (56, 58, 62) ein oder mehrere Luft-Absauggebläse (58 enthält, die mit der oder den Austrittsöffnungen (54) über eine unterhalb des Fußbodens (14) des Gebäudes (10) der Anlage vorgesehene Leitung (56) verbunden sind, so daß die Luft durch die oder jede der Luft-Austrittsöffnungen (50) und die Luft-Austrittslöcher (54) des Gebäudes (10) der Anlage absesaugt wird.

8. Tierzuchtanlage nach Anspruch 7, dadurch gekennzeichnet, daß das oder die Luft-Absauggebläse (58) unterhalb und entlang der Längs-Mittellinie des Fußbodens (14) der Anlage angeordnet ist bzw. sind, so daß die abgesaugte Luft unterhalb der Anlage ausgestoßen wird.

9. Tierzuchtanlage nach Anspruch 8, dadurch gekennzeichnet, daß zwei Gebläse (58) auf der Längs-Mittellinie der Anlage und mit einem gewissen Abstand zueinander angeordnet sind.

10. Tierzuchtanlage nach einem der vorangegangenen Ansprüche, dadurch gekennzeichnet, daß eine Erwärmungsvorrichtung (40, 64) zur Erwärmung der Luft in der Anlage vorgesehen ist.

11. Tierzuchtanlage nach einem der Ansprüche 7 bis 9 und 10, dadurch gekennzeichnet, daß eine Steuervorrichtung zur Steuerung der Geschwindigkeit des oder der Luft-Absauggebläse (58) und zur Steuerung des Betriebes der Erwärmungsvorrichtung (40, 64) vorgesehen ist, mit der ein einstellbarer Luftdurchsatz der Anlage sichergestellt und die Temperatur und Fuechtigkeit der Luft in der Anlage gesteuert wird.

12. Tierzuchtanlage nach einem der vorangegangenen Ansprüche, dadurch gekennzeichnet, daß Lufteinlaß (36) einen oder mehrere im Dach (24) des Gebäudes (10) angeordnete Einlässe (36) enthält.

13. Tierzuchtanlage nach Anspruch 12, dadurch gekennzeichnet, daß der oder die Lufteinlässe (36) mit jeweils einem Ventil (44) versehen ist (sind), mit dessen (deren) Hilfe der Luftfluß durch die Einlässe (36) einstellbar ist.

14. Tierzuchtanlage nach Anspruch 12 oder 13, dadurch gekennzeichnet, daß der oder die Lufteinlässe (36) mit jeweils einem Luftfilter und einer Luftverteilungsvorrichtung (42) zur Filterung und Verteilung der durch die Lufteinlässe (36) fließenden Luft vorgesehen ist.

15. Tierzuchtanlage nach einem der Ansprüche 12 bis 14, dadurch gekennzeichnet, daß das äußere Endes des oder der Lufteinlässe (36) mit einer Haube (38) versehen ist (sind), mit der der ungekehrte Luftstrom durch den oder die Lufteinlässe (36) begrenzt oder verhindert wird.

16. Tierzuchtanlage nach einem der vorangegangenen Ansprüche, dadurch gekennzeichnet, daß eine Stall-Käfigreihe (26) entlang jeder Seitenwand (20, 22) der Anlage vorgesehen ist, wobei die Längsachse jedes Käfigs (26) quer zur Längsachse der Anlage ausgerichtet ist.

17. Tierzuchtanlage nach einem der vorangegangenen Ansprüche, dadurch gekennzeichnet, daß der oder die Käfige (26) mit beweglichen Trennwände (28) versehen ist (sind), so daß die Größe des bzw. der Käfig(e) (26) entsprechend der Anzahl und/oder Größe der in dem (den) Käfigen (26) unterzubringenden Tiere verändert werden kann.

18. Tierzuchtanlage nach einem der vorangegangenen Ansprüche, dadurch gekennzeichnet, daß fie Futter- und Wasser-Zufuhranlage (30) am Ende des oder der Käfige (26) unmittelbar neben der Längs-Mittellinie des Gebäudes (10) der Anlage vorgesehen ist.

Fig.1.

Fig.2.

Fig.3.

Fig.4.

Fig.5.

Fig.6.

Fig.7.